# FASCICULE DE BREVET EUROPEEN

(11) **EP 0 840 549 B1**
(45) Date de publication et mention de la délivrance du brevet: **03.04.2002**
(21) Numéro de dépôt: 96926446.4
(22) Date de dépôt: 23.07.1996
(51) Int. Cl.: A01N 47/24, A01N 47/02

(54) **ASSOCIATIONS INSECTICIDES D'UN OXIME CARBAMATE AVEC UN INSECTICIDE A GROUPE PYRAZOLE, PYRROLE OU PHENYLIMIDAZOLE**
INSEKTIZIDE ZUSAMMENSETZUNG AUS EINEM OXIMCARBAMAT MIT EINEM PYRAZOL-, PYRROL- ODER PHENYLIMIDAZOLINSEKTIZID
INSECTICIDAL COMBINATIONS OF AN OXIME CARBAMATE WITH AN INSECTICIDE HAVING A PYRAZOLE, PYRROLE OR PHENYLIMIDAZOLE GROUP

(30) Priorité: 26.07.1995 FR 9509341
(43) Date de publication de la demande: 13.05.1998
(73) Titulaire: AVENTIS CROPSCIENCE S.A., 69009 Lyon (FR)
(72) Inventeur: LACOMBE, Jean-Pierre, F-69005 Lyon (FR)
(74) Mandataire: Tetaz, Franck
(86) Numéro de dépôt international: FR9601156
(87) Numéro de publication internationale: WO9704654

(56) Documents cités:
- EP-A- 0 295 117
- EP-A- 0 337 103
- EP-A- 0 435 609
- EP-A- 0 460 940
- EP-A- 0 484 165
- EP-A- 0 661 000
- C.TOMLIN (ED.): "The Pesticide Manual, Tenth Edition" 1995 , THE ROYAL SOCIETY OF CHEMISTRY / BRITISH CROP PROTECTION COUNCIL , CAMBRIDGE, GB XP002002072 * page xii, alinéa 8 * * page 982, "679 thiodicarb, oxime carbamate" * * page 1339, colonne 2, alinéa 3, "oxime carbamate" * * page 24, "17 aldicarb, oxime carbamate" * * page 26, "18 aldoxycarb, oxime carbamate" *
- DATABASE WPI Week 8844 Derwent Publications Ltd., London, GB; AN 88-310701 XP002002074 & JP,A,63 227 504 (HOKKO CHEM IND) , 21 Septembre 1988
- CHEMICAL ABSTRACTS, vol. 120, no. 9, 28 Février 1994 Columbus, Ohio, US; abstract no. 99365, J.R.WHITEHEAD ET AL.: "Performance of Pirate, insecticide-miticide, against cotton pests, in the mid-south in 1992" XP002002073 & PROC.-BELTWIDE COTTON CONF., vol. 2, 1993, pages 832-834,

## Description

La présente invention concerne de nouvelles associations agrochimiques pour la protection des plantes comprenant en combinaison une quantité efficace de A, insecticide de la famille des oxime carbamates tel que l'aldicarb ou l'aldoxycarb et B, insecticide à groupe pyrazole, pyrrole ou phénylimidazole, ainsi qu'un procédé de traitement des plantes à l'aide de ces associations.
Au sens du présent texte, les mots insecticide et insecte doivent être pris dans leur acceptation courante large et non dans leur acceptation strictement scientifique (zoologique). C'est ainsi que par le terme insecte, on entend tout animal très petit tels que arthropodes (insectes au sens strict et zoologique, arachnides, myriapodes) et nématodes.
Il est toujours désirable d'améliorer le spectre d'activité et l'efficacité de tels composés à action insecticide, ou de les renforcer en les associant à d'autres molécules afin d'obtenir un produit plus performant ou encore de prévenir l'apparition de résistances à ces insecticides.

La demande EP 0 435 609 A1 décrit une composition combinant du thiodicarb et du (+)-5-amino-1-(2,6-dichloro-α,α,α-trifluoro-p-tolyl)-4 trifluorométhylsulfinylpyrazole z-carbonitrile pour une application arthropodicide efficace.

De préférence, l'insecticide A de la famille des oxime carbamates est l'aldicarb ou 2-méthyl-2-(méthylthio)propanal O-[(méthylamino)carbonyl]oxime, dont la structure et les propriétés sont résumées dans "The Pesticide Manual" dixième édition (Clive Tomlin), 1994, Crop Protection Publications. Dans le même document, la structure et les propriétés de l'aldoxycarb ou 2-méthyl-2-(méthylsulfonyl)propanal O-[(méthylamino)carbonyl]oxime sont résumées.

Comme insecticides B à groupe pyrazole, pyrrole ou phénylimidazole, on peut citer ceux décrits par les demandes de brevet européen EP 0295117, EP 0460940 ou EP 0484165, respectivement. De préférence, l'insecticide choisi dans la présente invention l'est dans la famille des insecticides à groupe pyrazole. De préférence encore, l'insecticide à groupe pyrazole est un composé de formule générale (I):

1-[R²R¹R³ phenyl] 3-CN 4-[S(O)ₙR⁴] 5-R⁵ pyrazole (I)

dans laquelle
R¹ et R² représentent un atome d'hydrogène ou d'halogène en position 2 ou 6 sur le noyau phényle, l'un au moins d'entre eux étant autre que l'atome d'hydrogène,
R³ représente un atome d'halogène ou un groupe haloalkyle ou haloalkoxy ou SF₅ en position 4 sur le noyau phényle,
R⁴ représente un groupe alkyle ou haloalkyle,
R⁵ représente un groupe amino éventuellement mono ou disubstitué par un groupe alkyle, haloalkyl, acyle ou alkoxycarbonyle,
n est 0, 1 or 2.

Les groupes alkyle de cette formule (I) sont de préférence des radicaux alkyle inférieurs, c'est-à-dire des radicaux ayant de 1 à 4 atomes de carbone.
De manière avantageuse, on choisit le composé dont le nom commun est fipronil de formule chimique (±)-5-amino-1-(2,6-dichloro-α,α,α-trifluoro-*p*-tolyl)-4-trifluorométhylsulfinylpyrazole-3-carbonitrile. Outre sa divulgation dans la demande EP 0295117, les propriétés de ce composé ont fait l'objet d'une publication dans les comptes rendus de Brighton Crop Protection Conference de 1992 (Pest and Diseases, page 29-34).

De manière préférée les associations selon l'invention sont utilisables en traitement de sol.

L'invention a encore pour objet des compositions comprenant une association selon l'invention précitée.

L'invention comprend en outre un procédé de traitement des plantes contre les insectes, caractérisé en ce que l'on applique une association des deux matières actives. On peut également appliquer une composition contenant les deux matières actives ou, soit simultanément soit successivement soit séquentiellement de manière à avoir l'effet conjugué, deux compositions contenant chacune l'une des deux matières actives.
L'invention a encore pour objet un procédé de traitement de sol caractérisé en ce que la culture est choisie dans le groupe comprenant les céréales (par ex. blé, orge, seigle), le maïs, le sorgho, le tournesol, le coton, le riz, le pois, le colza, la pomme de terre, les cultures maraîchères, la betterave.

Selon une variante, l'invention a également pour objet un procédé de traitement de sol par application notamment dans la raie de semis :
- soit d'une composition selon l'invention, par ex. un granulé, contenant les deux matières actives, en association ou composition,
- soit de deux granulés contenant chacun une des deux matière active, avec éventuellement un ou plusieurs supports solides ou liquides acceptables en agriculture et/ou éventuellement un ou plusieurs agents tensioactifs acceptables en agriculture.
   Ce procédé est avantageusement mis en oeuvre dans des semis de céréales, maïs, coton, tournesol, betterave.
   Les doses d'emploi des associations de composés selon l'invention peuvent varier dans de larges limites, notamment selon le type de culture et selon la virulence, la nature et le degré de l'attaque par les insectes et les conditions climatiques. L'insecticide (B), de préférence le fipronil, est utilisé à une dose allant de 100 à 300 g/ha (gramme par hectare), de préférence 150 à 250 g/ha, et l'insecticide (A), de préférence l'aldicarb, est utilisé à une dose allant de 300 à 1500 g/ha, de préférence 500 à 1000 g/ha, le ratio B/A est alors compris entre 0,067 et 1, de préférence entre 0,15 et 0,5, le ratio A/B est compris entre 1 et 15,de préférence entre 2 et 7. La dose d'application des granulés (un granulé contenant les deux matières actives ou un mélange de deux granulés contenant chacun une des deux matière active) dans la raie de semis est généralement comprise entre 7 et 20 kg de granulés/ha, de préférence entre 10 et 15 kg/ha.

Les procédés selon l'invention sont particulièrement utiles pour la destruction d'insectes nuisibles.

Parmi ces derniers, les divers variétés de mouches, telles que la mouche grise (Phorbia coarctata) ou la mouche des semis (Phorbia platura), les atomaires, les blaniules, les scutigerelles, les cicadelles, les pucerons, les nématodes, ainsi que les taupins (Agriotes sp., Athous haemorrhoïdalis) sont détruits de façon tout à fait satisfaisante par la mise en oeuvre d'une association, d'une composition, d'un traitement selon l'invention.

Enfin, l'invention concerne aussi un produit comprenant l'aldicarb et le fipronil pour application simultanée, successive ou séquentielle dans la protection des plantes contre les insectes.

Les exemples suivants sont donnés pour illustrer les associations, compositions et traitement selon l'invention. Bien entendu ces exemples ne sont pas limitatifs et bien d'autres cultures peuvent être traitées et insectes contrôlés par les associations et compositions selon l'invention.

### Exemple 1. Essai sur betterave attaquée par des taupins.

Dans un champ on réalise 5 parcelles dans lesquelles on applique, en même temps que l'on plante les graines de betterave (environ 6 graines par mètre):
a) 11,5 kg/ha d'un granulé (ou mélange de granulés) selon l'invention contenant 86g/kg d'aldicarb et 14g/kg de fipronil (soit 989 g d'aldicarb et 161 g de fipronil par hectare),
b) 10 kg/ha d'un ganulé contenant 20g/kg de fipronil B (soit 200 g/ha de B),
c) 10 kg/ha d'un ganulé contenant 100g/kg d'aldicarb A (soit 1000 g/ha de A),
d) 12 kg/ha d'un ganulé contenant 50g/kg de carbofuran (soit 600 g/ha) comme témoin commercial de référence (= Curater),
e) aucun traitement (parcelle témoin).

Le nombre de betteraves obtenues au décamètre en fin de levée (39 jours après semis-stade 2-4 feuilles), alors que l'ensemble du champ a subi une attaque par des taupins, est de 45,3 pour a), 37,5 pour b), 24,9 pour c), 40,3 pour d) et 10,1 pour e).

### Exemple 2. Essai sur betterave attaquée par des atomaires.

Avec les mêmes conditions de traitements a) à e) qu'à l'exemple 1, mais sur un site différent et ayant subi une attaque par atomaires, on obtient les résultats suivants :

Le nombre de betteraves obtenues au décamètre en fin de levée (49 jours après semis-stade 6-8 feuilles) est de 49,1 pour a), 43,5 pour b), 47,6 pour c), 47,6 pour d) et 41,5 pour e).

Le gain de plantes par rapport au témoin (entre 4,8 et 18,3%) semble ici moins important que pour l'exemple 1 mais ceci s'explique probablement par une attaque par atomaires peu sévère en comparaison de l'attaque par taupins de l'exemple 1.

Toutefois, le traitement selon l'invention se révèle également bien le meilleur traitement puisque le gain en plantes est de environ 20% (18,3%).

### Exemple 3. Essai sur betterave attaquée par des pucerons noirs (Aphis fabae).

Avec les mêmes conditions de traitements a) à e) qu'à l'exemple 1, mais sur un site différent et ayant subi une attaque par pucerons, on obtient les résultats suivants qui sont exprimés en fréquence (%) de plantes de betteraves attaquées :
Le pourcentage de plantes attaquées est de 25,0% pour a), 86,3% pour b), 35,0% pour c), 46,3% pour d) et 82,5% pour e).
Là encore, le traitement selon l'invention se révèle bien le meilleur traitement. Par ailleurs, le traitement b) est ici totallement inefficace.

Ces exemples illustrent bien la supériorité des associations, compositions et procédés selon l'invention tant par rapport aux insecticides seuls que par rapport à un produit commercial de référence.

Par ailleurs aucun phénomène de phytotoxicité n'est observé dans ces exemples.

Pour leur emploi dans la pratique, les associations selon l'invention sont rarement utilisées seules et peuvent être utilisées dans des compositions contenant l'une ou l'autre des matières actives ou encore les deux ensemble. Dans chaque composition, les matières actives sont habituellement associées à un support, solide ou liquide, utilisable en agriculture et éventuellement au moins un agent tensioactif.

Ces compositions, utilisables pour la protection des végétaux contre les insectes, contiennent comme matière active au moins un des constituants de l'association selon l'invention tel que décrit précédemment en combinaison avec les supports solides ou liquides, acceptables en agriculture et/ou les agents tensioactifs également acceptables en agriculture. En particulier sont utilisables les supports inertes et usuels et les agents tensioactifs usuels.
Ces compositions contiennent habituellement entre 0,5 et 95% de composé selon l'invention, c'est à dire soit l'association soit une des deux matières actives. Sauf indication contraire les pourcentages donnés dans cette description, incluant les revendications, sont en poids.
Par le terme "support", dans le présent exposé, on désigne une matière organique ou minérale, naturelle ou synthétique, avec laquelle la matière active est associée pour faciliter son application sur la plante, sur des graines ou sur le sol. Ce support est donc généralement inerte et il doit être acceptable en agriculture, notamment sur la plante traitée. Le support peut être solide (argiles, silicates naturels ou synthétiques, silice, résines, cires, engrais solides, etc...) ou liquide (eau, alcools, cétones, fractions de pétrole, hydrocarbures aromatiques ou paraffiniques, hydrocarbures chlorés, gaz liquéfiés, etc...).
L'agent tensioactif peut être un agent émulsionnant, dispersant ou mouillant de type ionique ou non ionique. On peut citer par exemple des sels d'acides polyacryliques, des sels d'acides lignosulfoniques, des sels d'acides phénolsulfoniques ou naphtalènesulfoniques, des polycondensats d'oxyde d'éthylène sur des alcools gras ou sur des acides gras ou sur des amines grasses, des phénols substitués (notamment des alkylphénols ou des arylphénols), des sels d'esters d'acides sulfosucciniques, des dérivés de la taurine (notamment des alkyltaurates), des esters phosphoriques d'alcools ou de phénols polyoxyéthylés. La présence d'au moins un agent tensioactif est généralement indispensable lorsque la matière active et/ou le support inerte ne sont pas solubles dans l'eau et que l'agent vecteur de l'application est l'eau.
Ces compositions peuvent contenir aussi toute sorte d'autres ingrédients tels que, par exemple, des colloïdes protecteurs, des adhésifs, des épaississants, des agents thixotropes, des agents de pénétration, des stabilisants, des séquestrants, etc... ainsi que d'autres matières actives connues à propriétés pesticides (notamment insecticides ou fongicides) ou à propriétés favorisant la croissance des plantes (notamment des engrais) ou à propriétés régulatrices de la croissance des plantes. Plus généralement les composés selon l'invention peuvent être associés à tous les additifs solides ou liquides correspondant aux techniques habituelles de la mise en formulation.
Pour leur application, les constituants de l'association se trouvent donc souvent sous forme de compositions, qui sont elles-mêmes sous des formes assez diverses, solides ou liquides.
Comme formes de compositions solides, on peut citer les poudres pour poudrage ou dispersion (à teneur en association selon l'invention pouvant aller jusqu'à 100 %) et les granulés, notamment ceux obtenus par extrusion, par compactage, par imprégnation d'un support granulé, par granulation à partir d'une poudre (la teneur en association selon l'invention dans ces granulés étant entre 0,5 % et 80 % pour ces derniers cas).
Selon un exemple de composition de granulés, on utilise les constituants suivants :

### Exemple G

- association ou une des deux matière active 50 g
- épichlorhydrine 2,5 g
- éther de cétyle et de polyglycol 2,5 g
- polyéthylène glycol 35 g
- kaolin (granulométrie : 0,3 à 0,8 mm) 910 g

Dans ce cas particulier on mélange les matières actives avec l'épichlorhydrine et on dissout avec 60 g d'acétone, on ajoute alors le polyéthylène glycol et l'éther de cétyle et de polyglycol. On arrose le kaolin avec la solution obtenue et on évapore ensuite l'acétone sous vide.
Les composés ou associations des dits composés peuvent encore être utilisés sous forme de poudre pour poudrage. On peut aussi utiliser une composition comprenant 50 g de matière(s) active(s) et 950 g de talc ou on peut aussi utiliser une composition comprenant 20 g de matière(s) active(s), 10 g de silice finement divisée et 970 g de talc. On mélange et broie ces constituants et on applique le mélange par poudrage.
Comme formes de compositions liquides ou destinées à constituer des compositions liquides lors de l'application, on peut citer les solutions, en particulier les concentrés solubles dans l'eau, les concentrés émulsionnables, les émulsions, les suspensions concentrées, les aérosols, les poudres mouillables (ou poudre à pulvériser), les pâtes.

Les concentrés émulsionnables ou solubles comprennent le plus souvent 10 à 80 % de matière active, les émulsions ou solutions prêtes à l'application contenant, quant à elles, 0,01 à 20 % de matière active.
Par exemple, en plus du solvant, les concentrés émulsionnables peuvent contenir quand c'est nécessaire, 2 à 20 % d'additifs appropriés comme les stabilisants, les agents tensioactifs, les agents de pénétration, les inhibiteurs de corrosion, les colorants ou les adhésifs précédemment cités.
Les suspensions concentrées, également applicables en pulvérisation, sont préparées de manière à obtenir un produit fluide stable ne se déposant pas et elles contiennent habituellement de 2 à 75 % de matière active, de 0,5 à 15 % d'agents tensioactifs, de 0,1 à 10 % d'agents thixotropes, de 0 à 10 % d'additifs appropriés, comme des anti-mousses, des inhibiteurs de corrosion, des stabilisants, des agents de pénétration et des adhésifs et, comme support, de l'eau ou un liquide organique dans lequel la matière active est peu ou pas soluble. Certaines matières solides organiques ou des sels minéraux peuvent être dissous dans le support pour aider à empêcher la sédimentation ou comme antigels pour l'eau.
Un exemple d'une telle formulation est donné ci-dessous :

### Exemple SC:

- matière active 600 g
- phosphate de tristyrylphénol polyéthoxylé 50 g
- alkylphénol polyéthoxylé 50 g
- polycarboxylate de sodium 20 g
- éthylène glycol 50 g
- huile organopolysiloxanique (antimousse) 1 g
- polysaccharide 1,5 g
- eau qsp 11

Les poudres mouillables (ou poudre à pulvériser) sont habituellement préparées de manière qu'elles contiennent 20 à 95 % de matière active, et elles contiennent habituellement, en plus du support solide, de 0 à 5 % d'un agent mouillant, de 3 à 10 % d'un agent dispersant, et, quand c'est nécessaire, de 0 à 10 % d'un ou plusieurs stabilisants et/ou autres additifs, comme des agents de pénétration, des adhésifs, ou des agents antimottants, colorants, etc...
Pour obtenir ces poudres à pulvériser ou poudres mouillables, on mélange intimement les matières actives dans des mélangeurs appropriés avec les substances additionnelles et on broie avec des moulins ou autres broyeurs appropriés. On obtient par là des poudres à pulvériser dont la mouillabilité et la mise en suspension sont avantageuses. On peut les mettre en suspension avec de l'eau à toute concentration désirée.
A la place des poudres mouillables, on peut réaliser des pâtes. Les conditions et modalités de réalisation et d'utilisation de ces pâtes sont semblables à celles des poudres mouillables ou poudres à pulvériser.
Comme cela a déjà été dit, les dispersions et émulsions aqueuses, par exemple les compositions obtenues en diluant à l'aide d'eau une poudre mouillable ou un concentré émulsionnable selon l'invention, sont comprises dans le cadre général de la présente invention. Les émulsions peuvent être du type eau-dans-l'huile ou huile-dans-l'eau et elles peuvent avoir une consistance épaisse comme celle d'une "mayonnaise".

## Revendications

1. Composition agrochimique comprenant une quantité efficace de A, composé insecticide de la famille des oxime carbamates choisi parmi l'aldicarb ou l'aldoxycarb, et B, composé insecticide à groupe pyrazole, pyrrole ou phénylimidazole, en un rapport pondéral A/B allant de 1 à 15.

2. Composition selon la revendication 1 dont le composé insecticide B est un insecticide à groupe pyrazole.

3. Composition selon la revendication 2 dont le composé insecticide B est un composé de formule générale (I) :
1-[R²R¹R³ phenyl] 3-CN 4-[S(O)ₙR⁴] 5-R⁵ pyrazole (I)
dans laquelle
R¹ et R² représentent un atome d'hydrogène ou d'halogène en position 2 ou 6 sur le noyau phényle, l'un au moins d'entre eux étant autre que l'atome d'hydrogène,
R³ représente un atome d'halogène ou un groupe haloalkyle ou haloalkoxy ou SF₅ en position 4 sur le noyau phényle,
R⁴ représente un groupe alkyle ou haloalkyle,
R⁵ représente un groupe amino éventuellement mono ou disubstitué par un groupe alkyle, haloalkyl, acyle ou alkoxycarbonyle,
n est 0, 1 or 2.

4. Composition selon la revendication 3 dont le composé insecticide B est le fipronil de formule chimique (±)-5-amino-1-(2,6-dichloro-α,α,α-trifluoro-*p*-tolyl)-4-trifluorométhylsulfinylpyrazole-3-carbonitrile.

5. Composition selon l'une des revendications précédentes comprenant également un ou plusieurs supports solides ou liquides acceptables en agriculture et/ou éventuellement un ou plusieurs agents tensioactifs acceptables en agriculture.

6. Composition selon l'une des revendications précédentes comprenant entre 0,5% et 95% de composés insecticides A et B, un ou plusieurs supports solides ou liquides acceptables en agriculture et/ou éventuellement un ou plusieurs agents tensioactifs acceptables en agriculture.

7. Utilisation d'une composition selon l'une des revendications précédentes pour le traitement de sol.

8. Procédé de traitement des plantes contre les insectes, **caractérisé en ce que** l'on applique une composition selon l'une quelconque des revendications 1 à 6, soit simultanément soit successivement soit séquentiellement, de manière à avoir l'effet conjugué, deux compositions contenant chacune l'une des deux matières actives.

9. Procédé de traitement de sol par application, notamment dans la raie de semis, d'une composition selon l'une des revendications 1 à 6, en particulier un granulé comprenant les deux composés insecticides ou de deux granulés contenant chacun un des deux composés insecticides, avec éventuellement un ou plusieurs supports solides ou liquides acceptables en agriculture et/ou éventuellement un ou plusieurs agents tensioactifs acceptables en agriculture **caractérisé en ce que** l'insecticide A, de préférence l'aldicarb, est utilisé à une dose allant de 300 à 1500g/ha, de préférence 500 à 1000g/ha, et l'insecticide B, de préférence le fipronil, est utilisé à une dose allant de 100 à 300g/ha, de préférence 150 à 250g/ha.

10. Procédé selon l'une des revendications 8 ou 9 particulièrement utile pour la destruction d'insectes nuisibles choisi dans le groupe comprenant la mouche grise, la mouche des semis, les atomaires, les blaniules, les scutigerelles, les cicadelles, les pucerons, les nématodes, les taupins.

11. Un produit comprenant un insecticide A et un insecticide B tels que définis à la revendication 1 pour application simultanée, successive ou séquentielle dans la protection des plantes contre les insectes.

12. Un produit selon la revendication précédente comprenant l'aldicarb et le fipronil.

## Patentansprüche

1. Agrochemische Zusammensetzung, die eine wirksame Menge einer Verbindung A, bei der es sich um eine insektizide Verbindung aus der Familie der Oximcarbamate handelt, die unter Aldicarb und Aldoxycarb ausgewählt ist, und einer Verbindung B, bei der es sich um eine insektizide Verbindung mit Pyrazol-, Pyrrol- oder Phenylimidazolgruppe handelt, in einem Gewichtsverhältnis A/B im Bereich von 1 bis 15 enthält.

2. Zusammensetzung nach Anspruch 1, wobei die insektizide Verbindung B ein Insektizid mit Pyrazolgruppe ist.

3. Zusammensetzung nach Anspruch 2, wobei die insektizide Verbindung B eine Verbindung der allgemeinen Formel (I)
1-[R²R¹R³ Phenyl] 3-CN 4-[S(O)ₙR⁴] 5-R⁵ pyrazol (I)
ist, in der bedeuten:
- R¹ und R² ein Wasserstoffatom oder Halogenatom in 2- oder 6-Stellung am Phenylring, wobei mindestens einer dieser Reste von Wasserstoff verschieden ist,
- R³ Wasserstoff, Halogenalkyl, Halogenalkoxy oder SF₅ in 4-Stellung am Phenylring,
- R⁴ Alkyl oder Halogenalkyl,
- R⁵ eine Aminogruppe, die gegebenenfalls einfach oder zweifach mit Alkyl, Halogenalkyl, Acyl oder Alkoxycarbonyl substituiert ist,
- n die Zahl 0, 1 oder 2.

4. Zusammensetzung nach Anspruch 3, wobei es sich bei der insektiziden Verbindung B um Fipronil mit der chemischen Formel (±)-5-Amino-1-(2,6-dichlor-α,α,α-trifluor-*p*-tolyl)-4-trifluormethylsulfmylpyrazol-3-carbonitril handelt.

5. Zusammensetzung nach einem der vorhergehenden Ansprüche, die außerdem einen oder mehrere feste oder flüssige, in der Landwirtschaft akzeptable Träger und/oder gegebenenfalls einen oder mehrere in der Landwirtschaft akzeptable grenzflächenaktive Stoffe enthält.

6. Zusammensetzung nach einem der vorhergehenden Ansprüche, die 0,5 bis 95 % der insektiziden Verbindungen A und B, einen oder mehrere feste oder flüssige, in der Landwirtschaft akzeptable Träger und/oder gegebenenfalls einen oder mehrere in der Landwirtschaft akzeptable grenzflächenaktive Stoffe enthält.

7. Verwendung einer Zusammensetzung nach einem der vorhergehenden Ansprüche für die Bodenbehandlung.

8. Verfahren zur Behandlung von Pflanzen gegen Insekten, **dadurch gekennzeichnet, daß** eine Zusammensetzung nach einem der Ansprüche 1 bis 6 gleichzeitig oder nacheinander oder sequentiell so aufgetragen wird, daß der kombinierte Effekt erhalten wird, wobei zwei Zusammensetzungen jeweils einen der beiden Wirkstoffe enthalten.

9. Verfahren zur Bodenbehandlung durch Anwendung, insbesondere in der Saatreihe, einer Zusammensetzung nach einem der Ansprüche 1 bis 6, insbesondere eines Granulats, das die beiden insektiziden Verbindungen enthält, oder von zwei Granulaten, von denen jedes Granulat eine der beiden insektiziden Verbindungen enthält, mit gegebenenfalls einem oder mehreren festen oder flüssigen, in der Landwirtschaft akzeptablen Trägern und/oder gegebenenfalls einem oder mehreren in der Landwirtschaft akzeptablen grenzflächenaktiven Stoffen, **dadurch gekennzeichnet, daß** das Insektizid A, vorzugsweise Aldicarb, in einer Dosis im Bereich von 300 bis 1500 g/ha, vorzugsweise 500 bis 1000 g/ha, und das Insektizid B, vorzugweise Fipronil, in einer Dosis im Bereich von 100 bis 300 g/ha, vorzugsweise 150 bis 250 g/ha, verwendet wird.

10. Verfahren nach einem der Ansprüche 8 und 9, das für die Vernichtung von Schadinsekten besonders gut geeignet ist, die unter der Brachfliege, der Bohnenfliege, den Schimmelkäfern, Tausendfüßlern, Asseln, Zikaden, Blattläusen, Nematoden sowie Schnellkäfern ausgewählt sind.

11. Produkt, das ein Insektizid A und ein Insektizid B, die wie in Anspruch 1 definiert sind, enthält, für die gleichzeitige, aufeinanderfolgende oder sequentielle Anwendung zum Schutz von Pflanzen vor Insekten.

12. Produkt nach dem vorhergehenden Anspruch, das Aldicarb und Fipronil enthält.

## Claims

1. Agrochemical composition comprising an effective amount of A, an insecticidal compound from the family of oxime carbamates, chosen from aldicarb or aldoxycarb, and B, an insecticidal compound possessing a pyrazole, pyrrole or phenylimidazole group, in an A/B weight ratio ranging from 1 to 15.

2. Composition according to claim 1, in which the insecticidal compound B is an insecticide possessing a pyrazole group.

3. Composition according to claim 2, in which the insecticidal compound B is a compound of general formula (I):
1-[R²R¹R³phenyl]-3-CN-4-[S(O)ₙR⁴]-5-R⁵pyrazole (I)
in which
R¹ and R² represent a hydrogen or halogen atom in the 2- or 6-position on the phenyl ring, at least one of them being other than the hydrogen atom,
R³ represents a halogen atom or a haloalkyl or haloalkoxy or SF₅ group in the 4-position on the phenyl ring,
R⁴ represents an alkyl or haloalkyl group,
R⁵ represents an amino group optionally mono- or disubstituted by an alkyl, haloalkyl, acyl or alkoxycarbonyl group,
n is 0, 1 or 2.

4. Composition according to claim 3, in which the insecticidal compound B is fipronil of chemical formula (±)-5-amino-1-(2,6-dichloro-α,α,α-trifluoro-*p*-tolyl)-4-trifluoromethylsulphinylpyrazole-3-carbonitrile.

5. Composition according to one of the preceding claims, also comprising one or a number of solid or liquid vehicles which are acceptable in agriculture and/or optionally one or a number of surface-active agents which are acceptable in agriculture.

6. Composition according to one of the preceding claims, comprising between 0.5 % and 95 % of insecticidal compounds A and B, one or a number of solid or liquid vehicles which are acceptable in agriculture and/or optionally one or a number of surface-active agents which are acceptable in agriculture.

7. Use of a composition according to one of the preceding claims for soil treatment.

8. Process for the treatment of plants against insects, **characterized in that** a composition according to any one of claims 1 to 6 is applied. or two compositions, each comprising one of the two active materials are applied, either simultaneously or successively or sequentially, so as to have the joint effect.

9. Soil treatment process by application, in particular in the sowing furrow, of a composition according to one of claims 1 to 6, in particular a granule comprising the two insecticidal compounds, or of two granules each comprising one of the two insecticidal compounds, with optionally one or a number of solid or liquid vehicles which are acceptable in agriculture and/or optionally one or a number of surface-active agents which are acceptable in agriculture, **characterized in that** the insecticide A, preferably aldicarb, is used at a dose ranging from 300 to 1500 g/ha, preferably 500 to 1000 g/ha, and the insecticide B, preferably fipronil, is used at a dose ranging from 100 to 300 g/ha, preferably 150 to 250 g/ha.

10. Process according to either of claims 8 and 9, which is particularly useful for destroying harmful insects chosen from the group comprising the wheat bulb fly, the bean seed fly, the members of the Atomaria genus, the millipedes of the Blaniulus genus, the centipedes of the Scutigerella genus, the leafhoppers, the aphids, the nematodes or the click beetles.

11. A product comprising an insecticide A and an insecticide B as defined in claim 1 for simultaneous, successive or sequential application in the protection of plants against insects.

12. A product according to the preceding claim comprising aldicarb and fipronil.
